## Europäisches Patentamt

## European Patent Office

## Office européen des brevets

(11) Veröffentlichungsnummer: **0 066 869**
A2

(12) # EUROPÄISCHE PATENTANMELDUNG

(21) Anmeldenummer: **82104955.8**

(51) Int. Cl.³: **B 01 D 53/04**

(22) Anmeldetag: **05.06.82**

(30) Priorität: **06.06.81 DE 3122701**

(43) Veröffentlichungstag der Anmeldung: **15.12.82**
**Patentblatt 82/50**

(84) Benannte Vertragsstaaten: **BE DE FR GB NL**

(71) Anmelder: **Bergwerksverband GmbH,**
**Franz-Fischer-Weg 61, D-4300 Essen 13 (DE)**

(72) Erfinder: **Knoblauch, Karl, Dr., Semperstrasse 55,**
**D-4300 Essen 1 (DE)**
Erfinder: **Richter, Ekkehard, Dr.,**
**Schmachtenbergstrasse 89, D-4300 Essen 18 (DE)**
Erfinder: **Giessler, Klaus, Weindorfstrasse 21,**
**D-4650 Gelsenkirchen (DE)**
Erfinder: **Körbächer, Werner, Striepensweg 4,**
**D-4330 Mühlheim (DE)**

(54) **Verfahren zur Trennung von Gasgemischen mittels Druckwechseltechnik.**

(57) Bei einem Verfahren zur Trennung von Gasgemischen mittels Druckwechseltechnik in einem zweistufigen Adsorptionsreaktor, bestehend aus einem Vorfilter und einem Trennfilter, erfolgt eine Gleichstrombeladung des Adsorptionsreaktors bei erhöhtem Druck, wobei stark adsorbierte Verunreinigungen aus dem Gasgemisch im Vorfilter und die übrigen unerwünschten Gaskomponenten im Trennreaktor adsorbiert werden; dabei strömt Produktgas am Ende des Trennreaktors bis kurz vor den Durchbruch einer nicht erwünschten Gaskomponente ab. Sodann werden Vorfilter und Trennreaktor gasmässig getrennt und der Vorfilter im Gegenstrom und der Trennreaktor im Gleichstrom teilweise entspannt. Nach gasmässiger Wiederverbindung von Vorfilter und Trennreaktor wird die Einheit im Gegenstrom weiter entspannt, anschliessend gespült und im Gleich- oder Gegenstrom wieder auf Beladungsdruck gebracht. Der Vorfilter kann vor der gasmässigen Wiederverbindung mit dem Trennreaktor vorgespült werden. Beim Spülen und Druckaufbauen kann Entspannungsgas Verwendung finden. Bevorzugt werden vier miteinander verkoppelte, zweistufige Adsorptionsreaktoren und ein zusätzlicher Vorfilter verwendet.

Die Erfindung betrifft ein Verfahren gemäß dem Oberbegriff von Anspruch 1.

Bei der Trennung solcher, aus mindestens drei Komponenten bestehenden Gasgemische mittels Druckwechseltechnik hat es sich eingebürgert, im Adsorptionsreaktor Vorfilter - z. B. gefüllt mit Adsorptionsmitteln - zu verwenden, um aus dem Einsatzgasgemisch zunächst solche Komponenten zu entfernen, welche an Adsorptionsmitteln besonders stark adsorbieren. Hierunter zählen unter anderem höhere Kohlenwasserstoffe, Aromate, Naphthene, aber auch Wasserdampf und andere Gase. Durch die Vorfiltertechnik wird erreicht, daß der eigentliche, mit einem Adsorptionsmittel gefüllte Trennreaktor über eine nahezu unbegrenzte Zeit im Einsatz bleiben kann, ehe das Adsorptionsmittel in nicht mehr vertretbarer Weise kontaminiert ist. Ein solches Verfahren ist in der DE-OS 27 29 558 beschriten worden. Typische Produktgase werden praktisch nicht oder nur unwesentlich gegenüber den anderen Gaskomponenten adsorbiert, z. B. $H_2$, He u. ä. Die Ausbeute an der zu gewinnenden Gaskomponente ist dadurch beschränkt, daß relativ große Mengen an Produktgas für Spülzwecke benötigt werden, die zum Beispiel mehr als 15 % des Produktgases ausmachen können - dies trifft vor allem dann zu, wenn relativ fest adsorbierte Gaskomponenten bei der Adsorberregeneration (Desorption) durch Spülen zu entfernen sind.

Die Aufgabe der Erfindung besteht in einer weiteren Verbesserung der Standzeit der Adsorptionsmittel, insbesondere der Vorfilter, und in der Erhöhung der Ausbeute an Produktgas; darüber hinaus soll der Desorptionsenddruck nach Möglichkeit bei Atmosphärendruck oder sogar leicht darüber liegen können.

...

2

Die Lösung der genannten Aufgabe wird bei einem Verfahren der eingangs beschriebenen Art durch die kennzeichnenden Merkmale des Anspruches 1 erzielt. Diese Lösung beruht also auf dem Grundgedanken, die Regeneration der Adsorptionsmittel des Vorfilters und Trennreaktors auf voneinander verschiedene Weise durchzuführen und hierbei vorzugsweise einen Teilspülschritt vorzusehen, bei dem wenigstens das Vorfilter nicht mit reinem Produktgas, sondern einem solchen Gas gespült wird, das einen höheren Gehalt an leicht desorbierbaren - d. h. schlechter adsorbierbaren - Gaskomponenten enthält, als das freizuspülende Gasgemisch. Auf diese Weise kann der Verlust an der Produktgaskomponente für Spülzwecke um bis zu 50 % reduziert werden. Typischerweise wird Entspannungsgas oder kostengünstig zur Verfügung stehendes Fremdgas mit den vorerwähnten Eigenschaften verwendet - hierbei überrascht die außerordentlich gründliche Spülwirkung des Entspannungases. Die Beendigung der Adsorption soll bevorzugt dann erfolgen, wenn weder die im Vorfilter noch die im Trennreaktor zu adsorbierenden Gaskomponenten bzw. eine dieser Gaskomponenten am jeweiligen Ende (von Vorfilter bzw. Trennreaktor) durchgebrochen sind. Optimal wäre eine solche Auslegung von Vorfilter und Trennreaktor, bei der die Gasdurchbrüche gleichzeitig bei beiden erfolgen würden - dies träfe dann aber nur für eine einzige Gaszusammensetzung zu. Zumindest wird der Vorfilter zweistufig entspannt. Allgemein ist es möglich, die Entspannungsphasen im Vorfilter und Trennreaktor gleichzeitig ablaufen zu lassen; es kann aber auch - wie später erläutert - von Vorteil sein, die Entspannung des Vorfilters erst vollständig durchzuführen und dann die Entspannung bzw. Teilentspannung des Trennreaktors folgen zu lassen und hierbei bevorzugt letzteres Entspannungsgas zur Vorfilterspülung einzusetzen.

...

Weitere Ausgestaltungen der Erfindung und besondere Lösungen ergeben sich aus den Unteransprüchen.

Der zweistufige Adsorptionsreaktor kann aus getrennten, aber auch aus einem einzigen Behälter bestehen, wobei eine gasmäßige Trennung des Vorfilters (1. Stufe) und des Trennreaktors (2. Stufe) und Gaszu- und -abführleitungen an den Enden der jeweiligen Stufen derart vorgesehen sein müssen, daß sie in erfindungsgemäßer Weise im Gleich- bzw. Gegenstrom betrieben werden können. Für den Fall der Anwendung des Verfahrens in nur einem einzigen, zweistufigen Adsorptionsreaktor empfiehlt es sich, Gaszwischenspeicher entsprechend den Verfahrensschritten der Patentansprüche vorzusehen.

Als Adsorptionsmittel eignen sich im Prinzip all diejenigen, die auf dem Erfindungsgebiet bisher Verwendung gefunden haben - wie Aktivkohlen, Kohlenstoffmolekularsiebe, Zeolithe und dergleichen; insbesondere kann es empfehlenswert sein, im Vorfilter und Trennreaktor verschiedene Adsorptionsmaterialien bzw. Gasfilter einzusetzen.

Die Druck- und Temperaturbedingungen bewegen sich im Rahmen des auf dem Erfindungsgebiet üblichen.

Es hat sich gezeigt, daß die Vorgehensweise gemäß Ziffern 2.1. bis 2.5. von Anspruch 1 in Verbindung mit den übrigen - im wesentlichen bekannten Merkmalen - von Patentanspruch 1 in außerordentlich wirkungsvoller Weise vor allem die Standzeit des Vorfilters verbessert und gleichzeitig die Ausbeute an Produktgas gegenüber den bekannten Verfahrensweisen erhöht wird.

Als besonders vorteilhaft hat sich der besondere Spülschritt gemäß Anspruch 2 herausgestellt; hierbei kann die

...

Das erfindungsgemäße Verfahren kann besonders effektiv betrieben werden, wenn gemäß Anspruch 7 zumindest vier der zweistufigen Adsorptionsreaktoren eingesetzt werden. Darüber hinaus kann ein weiterer Vorfilter dazu beitragen, daß die Gesamtanlage nicht stillgelegt zu werden braucht, wenn einer der Vorfilter bei Kontamination regeneriert oder ersetzt werden muß.

Durch die Maßnahmen von Patentanspruch 8 wird eine überraschend hohe Spülwirkung sogar für den Trennreaktor in einem später ablaufenden ersten Spülschritt erzielt und damit Produktgas für diesen Zweck eingespart.

Durch die Maßnahmen von Patentanspruch 9 wird die Zusammensetzung des ersten Entspannungsgases auf Produktgasqualität verbessert, was die Produktgasausbeute erhöht, da nun weiteres Produktgas für Restspül- und/oder Restdruckaufbauzwecke zur Verfügung steht.

Es sei betont, daß mit dem erfindungsgemäßen Verfahren auch Gasgemische als Produktgas zu verstehen sind, wenngleich in den häufigsten Anwendungsfällen das Produktgas aus einer einzigen Komponente bestehen wird.

Weitere Ziele, Merkmale, Vorteile und Anwendungsmöglichkeiten der vorliegenden Erfindung ergeben sich aus der nachfolgenden Beschreibung eines Ausführungsbeispieles anhand der beiliegenden Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

In der Zeichnung zeigt:

...

besondere Gegenstromspülung des Vorfilters sowohl im Anschluß an dessen teilweise Gegenstromentspannung (Schritt 2.3. von Anspruch 1), als auch parallel dazu, erfolgen, wobei der Reinigungseffekt bei Nacheinanderfolgen der Verfahrensschritte besonders gut ist, während das parallele Durchführen dieser Schritte vorteilhaft für den Zeitplan des Verfahrensablaufes ist.

Förderlich für die Produktgasausbeute sind weiterhin die Vorgehensweisen gemäß Anspruch 3 und/oder 4. Dabei überrascht es, daß der Spüleffekt in aller Regel praktisch genauso groß ist, als wenn reines Produktgas verwendet würde. Es kann vorteilhaft sein, eine weitere abschließende Spülphase mit reinem Produktgas im Gegenstrom durchzuführen. Darüber hinaus wirken die Entspannungsgase beim Druckaufbau im Gegenstrom gemäß Anspruch 4 sich praktisch genauso gut auf das Zurückdrängen der Kontaminationsfronten in den Adsorptionsmittelschichten aus, wie dies beim Druckaufbau mit reinem Produktgas der Fall ist.

Je nach der Menge von anfallendem Entspannungsgas aus der Gleichstromentspannung des Trennreaktors kann es erwünscht sein, den Druckaufbau gemäß Anspruch 5, zumindest teilweise, mit Produktgas vorzunehmen; hierbei empfiehlt es sich, den Druckaufbau zweiphasig durchzuführen, wobei in der ersten Phase Gleichstromentspannungsgas und in der zweiten Phase Produktgas verwendet wird.

Je nach Zusammensetzung des Einsatzgasgemisches und der geforderten Qualität an Produktgas kann es nützlich sein, gemäß Anspruch 6 beim Druckaufbau auch Einsatzgasgemisch im Gleichstrom zu verwenden; hierbei wird man, im Falle eines mehrphasigen Druckaufbaus, das Einsatzgasgemisch erst für die letzte Druckaufbauphase verwenden.

...

Die mit einem Hahn dargestellten Ventile dienen als Regelventile, während die übrigen nur eine Auf-/Zu-Funktion haben.

**Beispiel 1**

Es wurden vier zweistufige Adsorptionsreaktoren verwendet, die jeweils aus einem Vorfiltergehäuse mit einer Höhe von 340 und einem Durchmesser von 180 mm sowie einem Trennreaktor mit einer Gehäusegröße von 2.510 mm Höhe und 180 mm Durchmesser bestanden.

Die Trennreaktoren waren mit Kohlenstoffmolekularsieben mit einem Schüttgewicht von 660 g/l und die Vorfilter mit Aktivkohle mit einem Schüttgewicht von 400 g/l gefüllt.

Das Einsatzgasgemisch hatte folgende Zusammensetzung:

57,3 % $H_2$; 25,8 % $CH_4$; 7,4 % $N_2$; 0,04 % $C_3H_6$;
4,5 % $CO$; 1,7 % $CO_2$; 1,6 % $O_2$; 0,03 % $C_4H_8$;
1,2 % $C_2H_4$; 0,3 % $C_2H_6$; 0,08 % $C_4H_{10}$.

Der Beladungsdruck betrug 16 bar, der Enddruck nach erfolgter Entspannung etwa 1 bar. Die Temperatur entsprach der Umgebungstemperatur.

Von dem genannten Einsatzgasgemisch, welches ein Kokereigas war, wurde in einer Fahrweise, die den Ansprüchen 1 bis 7 entsprach, eine Produktgasmenge von 16 m³/h im Normzustand Wasserstoff ($H_2$) erzielt. Die Reinheit war besser als 99,9 Vol.-% $H_2$. Die Ausbeute an Wasserstoff war gleich 85 % des im Einsatzgasgemisches vorliegenden Wasserstoffes.

...

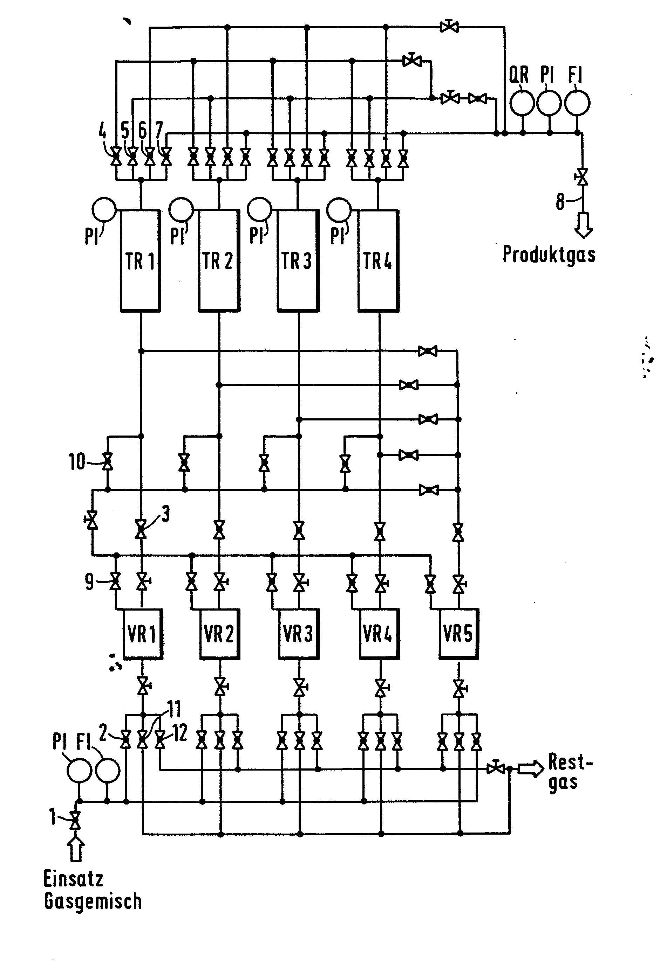

Fig. 1  ein Schaltschema für vier Adsorptionsreaktoren und
        einen fünften Vorfilter.

Ein zweistufiger Adsorptionsreaktor besteht dabei jeweils aus einem Vorfilter (VR) und einem Trennreaktor (TR). Der fünfte Vorfilter ist alternativ einsetzbar für den Fall, daß einer der vier übrigen Vorfilter regeneriert oder ersetzt werden muß.

Druck- und Durchflußmenge an Einsatzgasgemisch werden direkt hinter Ventil 1 ermittelt. Mit den dem Ventil 2 entsprechenden Ventilen wird die Gasverbindung von Einsatzgasgemisch zu den einzelnen Adsorptionsreaktoren hergestellt. Durch die dem Ventil 3 entsprechenden Ventile wird die gasmäßige Trennung bzw. Verbindung zwischen den einzelnen Vorfiltern und Trennreaktoren erzielt. Die den Ventilen 4, 5, 6 und 7 entsprechenden Ventile können die Gasverbindung zur Hauptproduktgasleitung 8 bzw. zu den anderen Adsorptionsreaktoren herstellen, wobei auch eine Aufteilung von Gleichstromentspannungsgas bzw. Produktgas eines Trennreaktors einerseits auf einen Adsorptionsreaktor zum Spülen und andererseits auf einen oder mehrere andere Adsorptionsreaktoren zum Druckaufbau möglich ist. Durch die den Ventilen 9 und 10 entsprechenden Ventile können die Vorfilter vor der gasmäßigen Wiederverbindung mit dem Trennreaktor im Gegenstrom mit einem Gas gespült werden, das zwischen dem Vorfilter und Trennreaktor eines anderen Adsorptionsreaktors aus dem dortigen Spülgasstrom abgezweigt wurde.

Die den Ventilen 11 und 12 entsprechenden Ventile dienen den beiden verschiedenen Entspannungsschritten.

Mit PI ist die Druckmessung, mit FI die Gasmengenmessung und mit QR die Gaskonzentrationsmessung gekennzeichnet.

...

druck mit Einsatzgasgemisch, wobei folgende Zeitintervalle gewählt wurden:

| | |
|---|---|
| Adsorption | 300 s |
| Entspannen im Gleichstrom | 116 s |
| Entspannen im Gegenstrom | 184 s |
| Spülen im Gegenstrom | 300 s |
| Druckaufbau 1 im Gegenstrom | 116 s |
| Druckaufbau 2 im Gleichstrom | 184 s |
| | ――――――――― |
| 1 Zyklus | 1.200 s |

Auch hier dauerte also ein kompletter Druckwechselzyklus 20 Minuten. Ebenso wurde eine Produktgasmenge von 16 m³/h im Normzustand Wasserstoff bei einer Reinheit von 99,9 Vol.-% erzielt.

Die Ausbeute an Wasserstoff betrug jetzt jedoch nur noch 82 %, und die Standzeit der Vorfilter verringerte sich auf 2.300 h.

Beispiel 2

Dieses Beispiel wird mit einer Anlage gemäß Fig. 1 ausgeführt. Rohgas strömt über Ventil 1 und 2 durch den regenerierten Adsorber VR 1, der zunächst mit Produktgas auf Produktgasdruck gefüllt ist. Ein Teil der Gaskomponenten wird in VR 1 adsorbiert, während das übrige Gas durch den ebenfalls regenerierten Adsorber TR 1 über Ventil 3 geleitet wird. TR 1 ist zu Beginn ebenfalls mit Produktgas auf Produktgasdruck gefüllt. Über Ventil 7 strömt das gereinigte Gasgemisch als Produktgas in die Produktgasleitung 8. Die

...

Die Vorfilter mußten nach 5.000 Betriebsstunden regeneriert werden.

Ein voller Druckwechselzyklus dauerte 20 Minuten, die sich wie folgt aufteilten:

| | |
|---|---|
| Adsorption | 300 s |
| Enspannen im Gleichstrom des Trennreaktors (gleichzeitige Entspannung und Vorspülung des Vorfilters) | 254 s |
| Entspannen im Gegenstrom | 46 s |
| Spülen im Gegenstrom | 300 s |
| Druckaufbau 1 im Gegenstrom | 208 s |
| Druckaufbau 2 im Gegenstrom | 69 s |
| Druckaufbau 3 im Gleichstrom | 23 s |

## Gegenbeispiel zu Beispiel 1

Zur Darstellung der durch die Erfindung erzielten Verbesserung wurde mit der Vorrichtung des vorgenannten erfindungsgemäßen Beispieles unter gleichen Temperatur- und Druckbedingungen sowie dem gleichen Einsatzgasgemisch eine Versuchsreihe gefahren, bei der gemäß dem Stand der Technik der Vorfilter und der Trennreaktor eines jeden zweistufigen Adsorptionsreaktors genau gleich behandelt wurden, d. h. daß eine gasmäßige Trennung und Wiederverbindung der jeweiliegen Vorfilter und Trennreaktoren nicht vorgenommen wurde. Dabei folgte der Adsorptionsphase eine erste Entspannungsphase im Gleichstrom, gefolgt von einer zweiten Entspannungsphase im Gegenstrom mit nachfolgendem Gegenstromspülen. Der Druckaufbau erfolgte zunächst im Gegenstrom mit Entspannungsgas aus der Gleichstromentspannungsphase und nachfolgend im Gleichstrom auf Beladungs-

...

bei geschlossenem Adsorbereingang von VR 1. Danach wiederholt sich der Zyklus. - Bei dieser Vorgehensweise werden also die hintereinandergeschalteten Adsorber VR und TR zweistufig im Gegenstrom entspannt, wobei das Druckentspannungsgas von TR in der ersten Phase für den ersten Spülschritt eines anderen VR-Adsorbers im Gegenstrom benutzt wird, während in der zweiten Phase das Druckentspannungsgas von TR durch VR im Gegenstrom abgezogen wird bzw. entspannt. Die Spülung erfolgt in beiden Adsorbern im Gegenstrom, wobei TR lediglich mit Produktgas gespült wird, welches anschließend im Gegenstrom durch VR abgezogen wird und dort das zweite Spülgas darstellt; der Druckaufbau erfolgt einstufig im Gegenstrom mit Produktgas.

Aus einem Rohgas, bestehend aus 60 Vol.-% $H_2$, 1,3 Vol.-% $CO_2$, 7,0 Vol.-% $N_2$, 6,0 Vol.-% CO und 25,7 Vol.-% $CH_4$ wird bei einem Produktgasdruck von 17 bar Wasserstoff gewonnen mit einer Druckwechselanlage in der vorgenannten Betriebsweise. CO und $N_2$ werden vornehmlich in den TR-Adsorbern, $CH_4$ und $CO_2$ in den VR-Adsorbern adsorbiert. Für einen Volumendurchsatz von 10 m³/h (i.N.) (i.N. = im Normzustand) des Rohgases sind die Adsorber folgendermaßen ausgelegt:

Adsorber TR 1 bis 4: jeweils 0,009 m³ Adsorptionsmittelvolumen

Adsorber VR 1 bis 4: jeweils 0,0125 m³ Adsorptionsmittelvolumen.

Alle Adsorber sind mit einem Kohlenstoffmolekularsieb gefüllt, dessen spezifische Oberfläche (bestimmt nach Brunauer, Emmett und Teller) mit 1.100 m²/g anzugeben ist.

Bei Betrieb dieser Anlage werden bei einem Rohgasdurchsatz von 10 m³/h (i.N.) 5,12 m³7h (i.N.) Wasserstoff mit einer Reinheit von 99,9 % als Produktgas erzeugt. Das Restgas

...

Adsorption wird beendet, wenn die in VR 1 adsorbierten Gaskomponenten noch nicht durch den Adsorber VR 1 durchgebrochen sind und die übrigen zu adsorbierenden Komponenten noch nicht durch den Adsorber TR 1 durchgebrochen sind. In der nachfolgenden Regenerationsphase werden zunächt die Ventile 2, 3 und 7 geschlossen. Das in VR 1 adsorbierte Gas und das Lückengasvolumen wird über Ventil 12 in die Restgasleitung entspannt. Die Druckentspannung in TR 1 erfolgt in zwei Phasen, indem das zunächst freiwerdende Druckentspannungsgas, welches überwiegend aus Produktgas und der in TR 1 zu adsorbierenden Komponente besteht, im Gegenstrom zur Adsorptionsrichtung über Ventil 10 abgezogen wird und den dann zum Spülen anstehenden Adsorber VR 2 im Gegenstrom spült und danach in die Restgasleitung entlassen wird. Dabei wird der Druck im Adsorber TR 1 vom Produktgasdruck auf einen Druck zwischen diesem und dem Restgasdruck abgesenkt. Im Adsorber VR 2 wird das an der dort adsorbierten Gaskomponente angereicherte Adsorptionsmittel bei Restgasdruck gespült. Diese Druckentspannungsphase wird nach einer vorgebenen Zeit abgeschlossen. Danach wird Ventil 3 wieder geöffnet und nunmehr werden die Adsorber TR 1 und VR 1 gemeinsam im Gegenstrom bis auf Restgasdruck über die Restgasleitung entspannt. Dabei desorbiert das restliche, auf dem Adsorptionsmittel von VR 1 befindliche Gas aufgrund der Spülwirkung derjenigen Gaskomponenten, die in TR 1 adsorbiert waren, sowie aufgrund der weiteren Druckabsenkung auf Restgasdruck. Nach Beendigung der Druckentspannung wird Adsorber TR 1 zunächst für eine kurze Zeitphase wieder von VR 1 abgeschottet. In dieser Zeit wird Adsorber VR 1 mit dem ersten Druckentspannungsgas aus Adsorber TR 4 im Gegenstrom gespült. Danach werden Ventile 3 und 6 geöffnet, so daß Produktgas im Gegenstrom beide Adsorber hintereinander spült. Das Spülgas verläßt VR 1 über die Restgasleitung. Der abschließende Druckaufbau beider Adsorber erfolgt gemeinsam im Gegenstrom mit Produktgas

...

Anzahl solcher Adsorbergruppen, parallel oder im Wechsel, durchgeführt werden.

Aus einem Rohgas, bestehend aus 60 Vol.-% $H_2$, 1,3 Vol.-% $CO_2$, 7,0 Vol.-% $N_2$, 6,0 Vol.-% CO und 25,7 Vol.-% $CH_4$ wird bei einem Produktgasdruck von 17 bar Wasserstoff in vorbeschriebener Weise gewonnen. CO und $N_2$ werden im wesentlichen in den TR-Adsorbern, $CH_4$ und $CO_2$ ausschließlich in den VR-Adsorbern adsorbiert. Für einen Volumendurchsatz von 10 m³/h (i.N.) des Rohgases sind die Adsorber folgendermaßen ausgelegt:

Adsorber TR 1 bis 4: jeweils 0,009 m³ Adsorptionsmittelvolumen

Adsorber VR 1 bis 4: jeweils 0,014 m³ Adsorptionsmittelvolumen

Adsorptionsmittel wie im Beispiel 2.

Bei Betrieb dieser Anlage werden bei einem Rohgasdurchsatz von 10 m³/h (i.N.) 5,06 m³/h (i.N.) Wasserstoff mit einer Reinheit von 99,9 % als Produktgas erzeugt. Das Restgas setzt sich aus 2,63 Vol.-% $CO_2$, 14,17 Vol.-% $N_2$, 19,03 Vol.-% $H_2$, 12,15 Vol.-% CO und 52,02 Vol.-% $CH_4$ zusammen. Der Restgasvolumenstrom beträgt 4,94 m³/h (i.N.), der Restgasdruck ca. 1 bar.

Beispiel 4

In diesem Beispiel erfolgt die Adsorptionsphase wieder wie in den beiden vorangegangenen Beispielen. In der Regenerationsphase wird zunächst jeweils wieder der TR-Adsorber vom VR-Adsorber getrennt und diesmal das erste Druckent-

...

setzt sich aus 2,67 Vol.-% $CO_2$, 14,34 Vol.-% $N_2$, 18,03 Vol.-% $H_2$, 12,30 Vol.-% CO und 52,66 Vol.-% $CH_4$ zusammen. Der Restgasvolumenstrom beträgt 4,88 m³/h (i.N.), der Restgasdruck ca. 1 bar.

Beispiel 3

In diesem Beispiel erfolgt die Regeneration - bei sonst gleicher Adsorption wie im Vorbeispiel - indem zunächst die jeweiligen TR-Adsorber beidseitig abgeschottet und in dieser Zeit der VR- Adsorber im Gegenstrom über die Restgasleitung entspannt wird. Sobald im VR-Adsorber ein vorbestimmter Druck zwischen dem Rohgas- und dem Restgasdruck erreicht ist, wird die Verbindung zwischen dem TR- und dem VR-Adsorber (Ventil 3) wieder hergestellt und im weiteren erfolgt eine Druckentspannung beider Adsorber gemeinsam im Gegenstrom bis auf Restgasdruck. Zu Beginn dieser zweiten Druckentspannungsphase des VR-Adsorbers ist dieser mit einem Gemisch aus Produktgas und den zu adsorbierenden Gaskomponenten aus dem Rohgas gefüllt. Das zu diesem Zeitpunkt im TR-Adsorber enthaltene Gasgemisch besteht nur aus Produktgas und der im TR-Adsorber zu adsorbierenden Komponente. Das letztere Gasgemisch hat deshalb im VR-Adsorber eine Spülwirkung bezüglich der dort adsorbierten Gaskomponenten. Abschließend erfolgt ein Spülschritt, indem Produktgas im Gegenstrom beide Adsorber durchströmt und in die Restgasleitung entlassen wird; der nachfolgende Druckaufbau erfolgt - wie im Beispiel 2 - im Gegenstrom zur Adsorptionsrichtung mit Produktgas. Das nachfolgende Beispiel entsprechend dieser Betriebsweise wird an vier Gruppen aus hintereinandergeschalteten VR- und TR-Adsorbern durchgeführt (siehe Fig. 1), es könnte aber an einer beliebigen

...

Spülgas strömt über die Restgasleitung ab. Der nachfolgende Druckaufbau erfolgt in zwei Phasen, wobei in der ersten Phase ein Druckaufbau durch Druckausgleich im Gegenstrom mit dem ersten Druckentspannungsgas aus einem TR-Adsorber wie weiter oben beschrieben. Der restliche Druckaufbau erfolgt, wie in den beiden vorgenannten Beispielen, im Gegenstrom mit Produktgas. Die anderen Adsorbergruppen werden im Zyklus in entsprechender Weise betrieben.

Aus einem Rohgas mit der Zusammensetzung wie in Beispiel 2 wird bei einem Produktgasdruck von 17 bar Wasserstoff in der vorbeschriebenen Weise gewonnen. Die Adsorption von CO, $N_2$, $CH_4$ und $CO_2$ erfolgt wie in den beiden Vorbeispielen. Für einen Volumendurchsatz von 10 m³/h (i.N.) des Rohgases sind die Adsorber folgendermaßen ausgelegt:

Adsorber TR 1 bis 4: jeweils 0,011 m³ Adsorptionsmittelvolumen

Adsorber VR 1 bis 4: jeweils 0,014 m³ Adsorptionsmittelvolumen

Adsorptionsmittel wie in den Beispielen 2 und 3.

Bei Betrieb dieser Anlage werden bei einem Rohgasdurchsatz von 10 m³/h (i.N.) 5,14 m³/h (i.N.) Produktgas erzeugt, das 99,9 Vol.-% $H_2$ aufweist. Es ist eine Spülgasmenge von 1,20 m³/h Stickstoff (als Fremdgas) mit einer Reinheit von über 99,0 % erforderlich. Das Restgas setzt sich aus 2,15 Vol.-% $CO_2$, 31,35 Vol.-% $N_2$, 14,19 Vol.-% $H_2$, 9,90 Vol.-% CO und 42,41 Vol.-% $CH_4$ zusammen. Der Restgasvolumenstrom beträgt 6,06 m³/h (i.N.).

spannungsgas des TR-Adsorber im Gleichstrom abgezogen und, durch entsprechende Ventilschaltung einer anderen Gruppe von TR- und VR-Adsorbern, im Gegenstrom zum dortigen gleichzeitigen Druckaufbau dieser Adsorbergruppe zugeführt. Dabei senkt sich in dem zu entspannenden TR-Adsorber der Druck von Produktgasdruck auf einen Zwischendruck zwischen diesem und Restgasdruck, während sich in der durch Druckausgleich im Druckaufbau befindenden Adsorbergruppe der Druck von Restgasdruck auf einen Druck von oberhalb desselben erhöht. Nach Abschluß dieser ersten Druckentspannungsphase wird der bis dahin entspannte TR-Adsorber beidseitig abgeschottet und steht für eine kurze Zeit still. Gleichzeitig mit der ersten Druckentspannungsphase des TR-Adsorbers und seiner nachfolgenden Stillstandszeit durchläuft der zugehörige VR-Adsorber zunächst eine Gegenstromdruckentspannungsphase mit Entlassung des Desorptionsgases in die Restgasleitung und anschließend eine Spülphase mit Fremdgas im Gegenstrom. Hierzu ist eine in der Fig. 1 nicht näher dargestellte Fremdgasleitung vorgesehen. Als Fremdgas kann jedes Gas in Frage kommen, das schwächer an dem verwendeten Adsorptionsmittel adsorbiert wird, als die in den VR-Adsorbern adsorbierten Komponenten des Rohgases; z. B. kann ein Fremdgas verwendet werden, das aus den in den TR-Adsorbern adsorbierten Gaskomponenten besteht, wenn solches kostengünstig zur Verfügung steht. Vor Beginn der Fremdgasspülung sollte sich der VR-Adsorber etwa auf Restgasdruck befinden. Nach Abschluß der Fremdgasspülung werden die zugehörigen TR- und VR-Adsorber wieder miteinander verbunden (Ventil 3), so daß der Druck im TR- Adsorber ebenfalls auf Restgasdruck erniedrigt werden kann; das dabei im Gegenstrom durch den VR-Adsorber abströmende Druckentspannungsgas führt zu einer weiteren Spülung des VR-Adsorbers, da sich dieser bereits etwa auf Restgasdruck befand. Anschließend werden wieder beide zugehörigen TR- und VR-Adsorber im Gegenstrom mit Produktgas gespült und das

## Beispiel 5

Die Adsorptionsphase erfolgt wieder in gleicher Weise wie in den Beispielen 2 bis 4. In der nachfolgenden Regenerationsphase durchläuft der jeweilige TR-Adsorber eine zweiphasige, der zugehörige VR-Adsorber eine einphasige Druckentspannung. In der ersten Druckentspannungsphase ist der TR- vom VR-Adsorber wieder getrennt (Ventil 3). Dabei wird der TR-Adsorber im Gleichstrom auf einen Druck zwischen Produktgas- und Restgasdruck entspannt, wobei das Druckentspannungsgas zum Gegenstromdruckaufbau einer anderen, in Reihe geschalteten Adsorbergruppe aus TR- und VR-Adsorbern verwendet wird (wie in Beispiel 4). Während dieser ersten Druckentspannungsphase wird der jeweilige VR-Adsorber im Gegenstrom über die Restgasleitung bis auf Restgasdruck entspannt. In der nachfolgenden zweiten Druckentspannungsphase werden die zugehörigen VR- und TR-Adsorber wieder verbunden (Ventil 3) und die weitere Druckentspannung erfolgt im Gegenstrom zur Restgasleitung; hierbei wird der VR-Adsorber wieder durch das Druckentspannungsgas aus dem zugehörigen TR-Adsorber gespült (siehe Beispiel 4). Die anschließende Produktgasspülung und der Druckaufbau erfolgt wie in Beispiel 4. - Dieses Beispiel unterscheidet sich also von Beispiel 4 durch die Fremdgasgegenstromspülung des VR-Adsorbers und die Stillstandsphase des TR-Adsorbers während dieser Zeit.

Aus einem Rohgas mit der Zusammensetzung wie in Beispiel 2 wird bei einem Produktgasdruck von 17 bar Wasserstoff in der vorbeschriebenen Weise gewonnen. Die Versuchsbedingungen sind ansonsten identisch mit Beispiel 4.

Bei Betrieb dieser Anlage werden bei einem Rohgasdurchsatz von 10 m³/h (i.N.) 5,09 m³/h (i.N.) Produktgas erzeugt, das 99,9 Vol.-% $H_2$ aufweist. Das Restgas setzt sich aus

...

2,65 Vol.-% $CO_2$, 14,26 Vol.-% $N_2$, 18,53 Vol.-% $H_2$, 12,22 Vol.-% CO und 52,34 Vol.-% $CH_4$ zusammen. Der Restgasvolumenstrom beträgt 4,91 m³/h (i.N.).

## Vergleichbeispiel zu Beispiel 2 bis 5

Aus einem Rohgas, bestehend aus 60 Vol.-% $H_2$, 1,3 Vol.-% $CO_2$, 7,0 Vol.-% $N_2$, 6,0 Vol.-% CO und 25,7 Vol.-% $CH_4$ wird bei einem Produktgasdruck von 17 bar Wasserstoff gewonnen in einer Druckwechselanlage, die aus vier parallel geschalteten Adsorbern besteht. Die Schaltung der Adsorber mit den vier Phasen Adsorption, Entspannung, Spülung und Druckaufbau entspricht der bei K. Knoblauch, J. Reichenberger,: Druckwechselverfahren zur Gastrennung, Haus der Technik, Vortragsveröffentlichungen, Bd. 404, Vulkan-Verlag Essen, 1978, beschriebenen Vorgehensweise; d. h., daß nach erfolgter Gleichstromadsorption beide Adsorber (VR und TR) in Reihe im Gegenstrom entspannt und mit Produktgas 500 s lang im Gegenstrom gespült werden, bevor der Gegenstromdruckaufbau mit Produktgas erfolgt. Dabei liegt der Restgasdruck bei 1 bar. Für einen Volumendurchsatz von 10 m³/h (i.N.) des Rohgases sind die Adsorber auf ein Adsorptionsmittelvo lumen von jeweils 0,025 m³ ausgelegt. Die Adsorber sind mit Kohlenstoffmolekularsieb gefüllt. Dieses hat eine spezifische Oberfläche (bestimmt nach Brunauer, Emmett und Teller) von ca. 1.100 m²/g (wie bei den Erfindungsbeispielen).

Bei Betrieb dieser Anlage werden, bei einem Rohgasdurchsatz von 10 m³/h (i.N.), 4,98 m³/h (i.N.) Wasserstoff mit einer Reinheit von 99,9 % als Produktgas erzeugt. Das Restgas setzt sich aus 2,59 Vol.-% $CO_2$, 13,94 Vol.-% $N_2$, 20,32 Vol.-% $H_2$, 11,95 Vol.-% CO und 51,2 Vol.-% $CH_4$ zusammen. Der Restgasvolumenstrom beträgt 5,02 m³/h (i.N.).

# BERGWERKSVERBAND GMBH

### VERSUCHSBETRIEBE DER BERGBAU-FORSCHUNG GMBH

Essen, 10.05.1982

Verfahren zur Trennung von Gasgemischen mittels Druckwechseltechnik

Patentansprüche

1. Verfahren zur Trennung von Gasgemischen mittels Druckwechseltechnik in einem zweistufigen Adsorptionsreaktor, bestehend aus einem Vorfilter und einem Trennreaktor, durch

1. Gleichstrombeladung des Adsorptionsreaktors bei erhöhtem Druck unter

1.1. Adsorption zumindest von in dem Gasgemisch ggf. vorhandenen höheren Kohlenwasserstoffen, Aromaten und Naphthenen im Vorfilter und der weiteren nicht erwünschten Gaskomponenten im Trennreaktor, sowie

1.2. Abströmen von Produktgas am Ende des Trennreaktors,

dadurch gekennzeichnet, daß

2. vor dem, vorzugsweise ersten, auf den Vorfilter und den Trennreaktor bezogenen, Durchbruch einer nicht erwünschten Gaskomponente

2.1. der Adsorptionsvorgang beendet wird,

2.2. Vorfilter und Trennreaktor gasmäßig getrennt,

2.3. der Vorfilter, vorzugsweise im Gegenstrom, und

...

2

ggf. der Trennreaktor, vorzugsweise im Gleichstrom, teilweise entspannt,

2.4. Vorfilter und Trennreaktor gasmäßig wieder verbunden sowie

2.5. Vorfilter und Trennreaktor, ggf. gemeinsam, im Gegenstrom weiter entspannt werden und

3. Vorfilter und Trennreaktor in an sich bekannter Weise im Gegenstrom gespült und im Gleich- oder Gegenstrom wieder auf Beladungsdruck gebracht werden.

2. Verfahren nach Anspruch 1, dadurch gekennzeichnet, daß ein Teil des Spülgases (Schritt 3. von Anspruch 1) zwischen Vorfilter und Trennreaktor entnommen und zur Gegenstromspülung des Vorfilters vor dessen gasmäßiger Wiederverbindung mit dem Trennreaktor (Schritt 2.4. von Anspruch 1) verwendet wird.

3. Verfahren nach Anspruch 1 oder 2, gekennzeichnet durch die Verwendung zumindest eines Teiles des Gleichstrom-Entspannungsgases des Trennreaktors (Schritt 2.3. von Anspruch 1) zur Gegenstromspülung des Trennreaktors und des Vorfilters (Schritt 3. von Anspruch 1).

4. Verfahren nach einem oder mehreren der Ansprüche 1 bis 3, gekennzeichnet durch die Verwendung zumindest eines Teiles des Gleichstrom-Entspannungsgases des Trennreaktors (Schritt 2.3. von Anspruch 1) zum zumindest teilweisen Druckaufbau des Vorfilters und Trennreaktors im Gegenstrom (Schritt 3. von Anspruch 1).

...

5. Verfahren nach einem oder mehreren der Ansprüche 1 bis 4, gekennzeichnet durch die Verwendung von Produktgas zum zumindest teilweisen Druckaufbau des Vorfilters und Trennreaktors im Gegenstrom (Schritt 3. von Anspruch 1).

6. Verfahren nach einem oder mehreren der Ansprüche 1 bis 5, gekennzeichnet durch die Verwendung von Einsatzgas-Gemisch zumindest für den abschließenden Druckaufbau - auf Beladungsdruck - des Vorfilters und Trennreaktors im Gleichstrom.

7. Verfahren nach einem oder mehreren der Ansprüche 1 bis 6, gekennzeichnet durch die Verwendung von zumindest vier zweistufigen Adsorptionsreaktoren mit an sich bekannten Verbindungsleitungen und Ventilen für die Verkopplung gemäß den einzelnen Verfahrensschritten.

8. Verfahren nach einem oder mehreren der Ansprüche 1 bis 7, dadurch gekennzeichnet, daß nach Beendigung des Adsorptionsvorganges und der gasmäßigen Trennung von Vorfilter und Trennreaktor (Schritt 2.2. von Anspruch 1) für zwischen 1/50 und 1/2 der Gesamtentspannungszeit der Trennreaktor- und/oder Vorfilter im Gegenstrom entspannt wird/werden und das/die Entspannungsgase für einen Teilspülschritt eines Vorfilters und/oder Trennreaktors verwendet wird.

9. Verfahren nach einem oder mehreren der Ansprüche 1 bis 7, dadurch gekennzeichnet, daß das Entspannungsgas eines ersten Teilentspannungsschrittes, zumindest des

...

4

Trennreaktors, auf einen zwischen Adsorptionsdruck und Restdruck bei der Spülung liegenden Zwischendruck einen weiteren Adsorptionsreaktor (Nachadsorber) zur Adsorption und Bereitstellung von Produktgas zugeführt wird.

1/1

0066869

Produktgas

Einsatz
Gasgemisch

Restgas